# EUROPEAN PATENT APPLICATION

(11) **EP 4 617 115 A1**
(43) Date of publication of application: **17.09.2025**
(21) Application number: 25157682.3
(22) Date of filing: 13.02.2025
(51) Int. Cl.: B60N 2/30

(54) **VEHICLE SEAT**

(30) Priority: 11.03.2024 KR 20240033970; 21.11.2024 KR 20240166824
(71) Applicant: Hyundai Transys Inc., Chungcheongnam-do 31930 (KR)
(72) Inventor: CHO, Jae Hoon, 18463 Hwaseong-si, Gyeonggi-do (KR); KWAK, Hae Dong, 18463 Hwaseong-si, Gyeonggi-do (KR); KIM, Hyeon Jae, 18463 Hwaseong-si, Gyeonggi-do (KR); PARK, Han Kyung, 18463 Hwaseong-si, Gyeonggi-do (KR); LEE, Won Young, 18463 Hwaseong-si, Gyeonggi-do (KR); KANG, Sin Jeong, 18463 Hwaseong-si, Gyeonggi-do (KR)
(74) Representative: Viering, Jentschura & Partner mbB Patent- und Rechtsanwälte

(57) **Abstract**

A vehicle seat may include a center frame including coupling holes formed therein, a back frame connected to the center frame at a first point, the back frame being reclinable around the first point serving as an axis, a sliding link movable along the coupling holes, a seat cushion frame connected to the sliding link at a second point, and a connecting link configured to connect the back frame to the seat cushion frame, and the seat cushion frame being tilted up around an axis extending through the second point.

## Description

### BACKGROUND

### (a) Technical Field

The present disclosure relates to a vehicle seat including a back frame configured to be rotated in conjunction with movement of a seat cushion frame.

### (b) Background Art

A vehicle has a seat provided therein and configured for a passenger to sit thereon. Recently, research and development has been actively conducted on an autonomous vehicle and a purpose-built vehicle (PBV). Accordingly, a space in the vehicle may be effectively used for various purposes. Specifically, a seat needs to be tilted up so as to secure space in the vehicle, and a seat cushion needs to be slidably moved for convenience of a passenger.

When the seat is slidably moved or tilted up, angle adjustment of the seatback is required. Generally, when the seat is slidably moved, the seatback is controlled to be reclined rearwards through a recliner. Further, when the seat is tilted up, the seatback is controlled to be put in the upright position. However, since separate power specifications or a separate seatback recliner is required to adjust the angle of the seatback, costs may increase in the production of a seat capable of being tilted up and slidably moved.

The above information disclosed in this Background section is only for enhancement of understanding of the background of the disclosure, and therefore it may contain information that does not form the prior art that is already known in this country to a person of ordinary skill in the art.

### SUMMARY OF THE DISCLOSURE

The present disclosure has been made in an effort to solve the above-described problems associated with the prior art, and it is an object of the present disclosure to provide a vehicle seat including a back frame capable of being rotated in conjunction with movement of a seat cushion frame by only operating the seat cushion frame without a separate configuration for rotation of the back frame

In one aspect, the present disclosure provides a vehicle seat including a center frame including coupling holes formed thereon, a back frame connected to the center frame at a first point, the back frame being reclinable around an axis extending through the first point, a sliding link being movable along the coupling holes, a seat cushion frame connected to the sliding link at a second point, and a connecting link configured to connect the back frame to the seat cushion frame, wherein the seat cushion frame is tilted up around an axis through the second point.

In an example embodiment, the connecting link may connect a third point of the back frame, located closer to the seat cushion frame than the first point, to a fourth point located closer to an end of the seat cushion frame than the second point.

In another example embodiment, the seat cushion frame may be moved in conjunction with movement of the sliding link, and the back frame may be rotated around the first point in conjunction with movement of the seat cushion frame.

In still another example embodiment, the sliding link may include a main body and protrusions, the main body extending in a first direction so as to be inserted into the coupling holes respectively provided on opposite sides of the center frame, the protrusions being connected to the main body and protruding toward an upper direction perpendicular to the first direction, and each of the protrusions may be connected to the seat cushion frame at the second point.

In yet another example embodiment, the vehicle seat may further include a tip-up locking part connected to the sliding link or the center frame, wherein the tip-up locking part may include a hook part locked with a fixing part provided on the seat cushion frame.

In still yet another example embodiment, the vehicle seat may further include a tip-up lever provided on one side of the center frame and a first cable connected to the tip-up lever, wherein the tip-up locking part may include a connecting part connected to the first cable and a spring configured to connect the connecting part to the hook part, when the tip-up lever is operated, the first cable may pull the connecting part, and when the connecting part is rotated, the hook part may be rotated so as to release locking between the tip-up locking part and the fixing part.

In a further example embodiment, each of the connecting part and the hook part may have a rotational axis extending in a second direction perpendicular to the first direction oriented from one side of the center frame to the other side thereof, and the fixing part may include a portion extending in the second direction, the portion contacting the hook part.

In another further example embodiment, the center frame may include a fixed frame extending in a first direction oriented from one side of the center frame to the other side thereof, and side frames each extending from the fixed frame in a second direction perpendicular to the first direction, the side frames respectively including the coupling holes formed thereon, and the fixed frame may include a sliding bracket located thereon, the sliding bracket including an insertion hole formed therein.

In still another further example embodiment, the vehicle seat may further include a circular spring disposed at the first point of each of the side frames, wherein the circular spring may including a first end fixed to the center frame and a second end fixed to the back frame, and when the seat cushion frame is tilted up, the circular spring may apply force in a direction in which the back frame is rotated so as to maintain a tip-up state of the seat cushion frame.

In yet another further example embodiment, the sliding bracket may include a sliding locking part provided thereon, the sliding locking part being connected to the sliding link, and when an end of the sliding locking part is separated from the insertion hole provided in the sliding bracket, the sliding link may be movable along the coupling holes.

In still yet another further example embodiment, the vehicle seat may further include a sliding lever provided on the other side of the center frame and a second cable configured to connect the sliding lever to the sliding locking part, the second cable may pull the sliding locking part in conjunction with an operation of the sliding lever such that the sliding locking part may be separated from the insertion hole.

In a still further example embodiment, the connecting link may be positioned to be inclined upwards relative to a movement direction of the sliding link in a tip-down state of the seat cushion frame.

In a yet still further example embodiment, the back frame may be rotated in a direction opposite to a rotation direction of the seat cushion frame when the seat cushion frame is tilted up or tilted down.

In another example embodiment, the vehicle seat may further include a swivel device connected to the center frame so as to enable rotation of the center frame.

Other aspects and example embodiments of the disclosure are discussed infra.

It is understood that the terms "vehicle", "vehicular", and other similar terms as used herein are inclusive of motor vehicles in general, such as passenger automobiles including sport utility vehicles (SUVs), buses, trucks, various commercial vehicles, watercraft including a variety of boats and ships, aircraft, and the like, and include hybrid vehicles, electric vehicles, plug-in hybrid electric vehicles, hydrogen-powered vehicles, and other alternative fuel vehicles (e.g., fuels derived from resources other than petroleum). As referred to herein, a hybrid vehicle is a vehicle that has two or more sources of power, for example, vehicles powered by both gasoline and electricity.

The above and other features of the disclosure are discussed infra.

### BRIEF DESCRIPTION OF THE DRAWINGS

The above and other features of the present disclosure will now be described in detail with reference to certain exemplary embodiments thereof illustrated in the accompanying drawings which are given hereinbelow by way of illustration only, and thus are not limitative of the present disclosure, and wherein:
FIG. 1 is a diagram showing a vehicle seat according to an embodiment of the present disclosure;
FIG. 2 is an exploded perspective view of the vehicle seat according to the embodiment of the present disclosure;
FIG. 3 is a diagram showing the tip-down state of a seat cushion frame according to the embodiment of the present disclosure;
FIG. 4 is a diagram showing the sliding state of the seat cushion frame according to the embodiment of the present disclosure;
FIG. 5 is a diagram showing the tip-up state of the seat cushion frame where a tip of the vehicle seat is up according to the embodiment of the present disclosure;
FIG. 6 is a diagram showing a center frame according to the embodiment of the present disclosure;
FIG. 7 is a diagram showing a sliding link according to the embodiment of the present disclosure;
FIG. 8 is a diagram showing a sliding locking part according to the embodiment of the present disclosure;
FIG. 9 is a diagram showing a state in which a tip-up lever according to the embodiment of the present disclosure is pulled;
FIG. 10 is a diagram showing a state in which a tip-up locking part and a fixing part according to the embodiment of the present disclosure are locked;
FIG. 11 is a diagram showing a state in which the tip-up locking part and the fixing part according to the embodiment of the present disclosure are unlocked;
FIG. 12 is a diagram showing a sliding lever according to the embodiment of the present disclosure;
FIG. 13 is a diagram showing a state in which the sliding lever according to the embodiment of the present disclosure is pulled;
FIG. 14 is a diagram showing a state in which the sliding locking part according to the embodiment of the present disclosure is inserted into an insertion hole; and
FIG. 15 is a diagram showing a state in which the sliding locking part according to the embodiment of the present disclosure is separated from the insertion hole.

It should be understood that the appended drawings are not necessarily to scale, presenting a somewhat simplified representation of various example features illustrative of the basic principles of the disclosure. The specific design features of the present disclosure as disclosed herein, including, for example, specific dimensions, orientations, locations, and shapes will be determined in part by the particular intended application and use environment.

In the figures, reference numbers refer to the same or equivalent parts of the present disclosure throughout the several figures of the drawing.

### DETAILED DESCRIPTION

Hereinafter, reference will be made in detail to various embodiments of the present disclosure, examples of which are illustrated in the accompanying drawings and described below. Advantages and features of the present disclosure and a method of achieving the same will become more apparent with reference to the embodiments described below in detail and the accompanying drawings. However, the present disclosure is not limited by the embodiments disclosed below, and may be implemented in various forms. The embodiments are provided to ensure that the disclosure of the present disclosure is complete, and to fully inform the scope of the disclosure to those skilled in the art to which the present disclosure pertains, and the present disclosure is only defined by the scope of the claims. In the drawings, the same reference numerals refer to the same or equivalent components of the present disclosure throughout the specification.

Meanwhile, in this specification, terms such as "first" and "second" are used to describe various components having the same names, and the terms are used only for the purpose of distinguishing one component from other components. The components are not limited by the terms in the following description.

The present disclosure has been described in detail with reference to example embodiments thereof, and the present disclosure may be used in various other combinations, modifications, and environments. That is, it will be appreciated by those skilled in the art that changes may be made in these embodiments without departing from the principles and spirit of the disclosure, the scope of which is defined in the appended claims and equivalents thereto. The embodiments describe the best mode to implement the technical idea of the present disclosure, and various changes required in specific application fields and uses of the present disclosure are also possible. Accordingly, the detailed description of the present disclosure is not intended to limit the present disclosure to the disclosed embodiments. Additionally, the scope of the appended claims should be construed as including other embodiments as well.

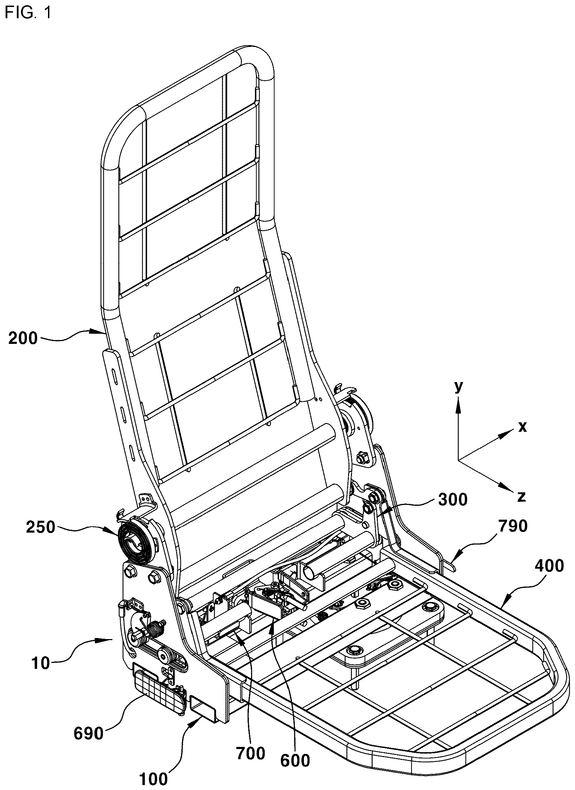

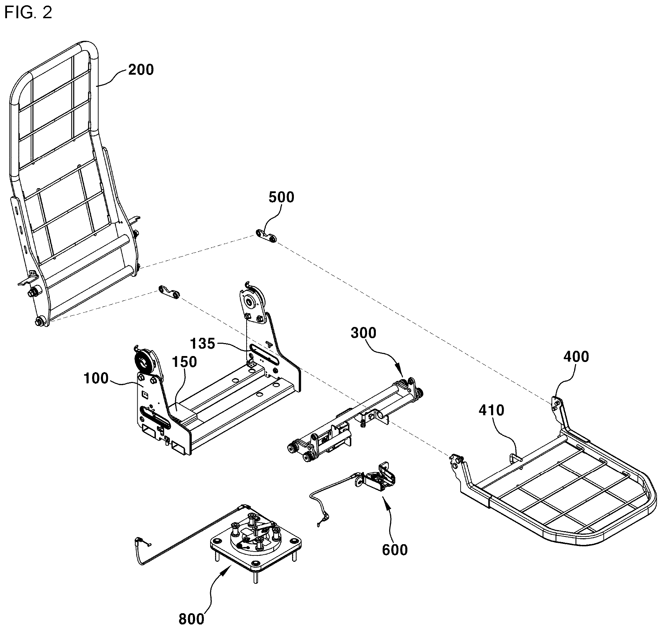

FIG. 1 is a diagram showing a vehicle seat according to an embodiment of the present disclosure, and FIG. 2 is an exploded perspective view of the vehicle seat according to the embodiment of the present disclosure.

Referring to FIGs. 1 and 2, a vehicle seat 10 according to an embodiment of the present disclosure may include a center frame 100, a back frame 200, a sliding link 300, a seat cushion frame 400, and a connecting link 500. The back frame 200, the sliding link 300, and the seat cushion frame 400 may be connected to the center frame 100.

The sliding link 300 may be disposed within the center frame 100. The sliding link 300 may be moved along coupling holes 135 respectively provided in one side and the other side of the center frame 100. The sliding link 300 is configured to extend in the first direction X. One end and the other end of the sliding link 300 may be respectively inserted into the coupling holes 135 respectively provided in one side and the other side of the center frame 100, which extend in the second direction Y perpendicular to the first direction X.

The back frame 200 may be connected to the center frame 100. The back frame 200 may be rotated around a point at which the back frame 200 and the center frame 100 are connected to each other. A circular spring 250 may be provided at the point at which the back frame 200 and the center frame 100 are connected to each other. A first end of the circular spring 250 may be fixed to the end of the center frame 100, and a second end of the circular spring 250 may be fixed to the end of the back frame 200. The circular spring 250 may apply elastic force to the back frame 200 in a direction in which the back frame 200 is erected.

The seat cushion frame 400 may be tilted up (such that a tip of the seat cushion frame is up) or may be slidably moved. The seat cushion frame 400 may be connected to the sliding link 300 so as to be movable with the sliding link. The seat cushion frame 400 and the sliding link 300 may be moved in the third direction Z substantially perpendicular to the first direction X and the second direction Y. The seat cushion frame 400 may not be directly connected to the center frame 100. The seat cushion frame 400 may be connected to the connecting link 500. Each of the ends of the seat cushion frame 400 may be connected to the sliding link 300 and the connecting link 500. However, a point at which the seat cushion frame 400 and the connecting link 500 are connected to each other may be located closer to the end of the seat cushion frame 400 than a point at which the seat cushion frame 400 and the sliding link 300 are connected to each other. The seat cushion frame 400 may be rotatably tilted up relative to the point at which the seat cushion frame 400 is connected to the sliding link 300.

The connecting link 500 may connect the back frame 200 to the seat cushion frame 400. The connecting link 500 may connect the end of the back frame 200 to the end of the seat cushion frame 400. Therefore, when the seat cushion frame 400 is tilted up or is slidably moved, the back frame 200 may be rotated. For example, when the seat cushion frame 400 is tilted up, the back frame 200 may be rotated in a direction opposite to the rotation direction of the seat cushion frame 400. For example, when the seat cushion frame 400 is slidably moved, the back frame 200 may be rotated to be tilted.

A tip-up locking part 600 may connect the seat cushion frame 400 to the sliding link 300 such that the seat cushion frame 400 is not tilted up. That is, when the seat cushion frame 400 is in the tip-down state, the tip-up locking part 600 may be locked with a fixing part 410 provided on the seat cushion frame 400. The tip-up locking part 600 may be fixedly coupled to the sliding link 300 or the center frame 100. In order to release locking of the tip-up locking part 600, a user may operate a tip-up lever 690 provided on one side of the center frame 100.

A sliding locking part 700 may be connected to the sliding link 300. The sliding locking part 700 may be coupled to a sliding bracket 150 provided on the center frame 100. That is, in the locked state between the sliding locking part 700 and the sliding bracket 150, movement of the sliding link 300 may be restricted. In order to release locking of the sliding locking part 700, a user may operate a sliding lever 790 provided on the other side of the center frame 100.

The vehicle seat 10 may include a swivel device 800 for rotation of the entire vehicle seat 10. The swivel device 800 may be disposed on the lower surface of the center frame 100. When the swivel device 800 is operated, the center frame 100 may be rotated. The swivel device 800 may include a separate locking part (not shown) configured to perform locking of the swivel device 800. The swivel device 800 may connect the vehicle seat 10 to the floor of the vehicle or to a rail placed on the floor of the vehicle and configured to allow the vehicle seat 10 to be movable therealong. When the vehicle seat 10 is rotated, it is preferable to rotate the vehicle seat 10 in a state in which the seat cushion frame 400 is tilted up in consideration of the limited interior space of the vehicle. However, when the seat cushion frame 100 is changed from the tip-up state to the tip-down state due to gravity or external force acting on the seat cushion frame 100, the seat cushion frame 100 may interfere with the surrounding structures during rotation of the vehicle seat 10. When the vehicle seat 10 is rotated, the seat cushion frame 400 may maintain the tip-up state thereof until the vehicle seat 10 is rotated by a specific angle or more. Unlike the above-described example, the seat cushion frame 400 may maintain the tip-up state thereof during a process in which the vehicle seat 10 performs a swivel operation.

According to the embodiment of the present disclosure, the seat cushion frame 400 and the back frame 200 are connected to each other through the connecting link 500 such that the back frame 200 is moved in conjunction with movement of the seat cushion frame 400. Accordingly, when the seat cushion frame 400 is slidably moved or is tilted up, the back frame 200 may be rotated.

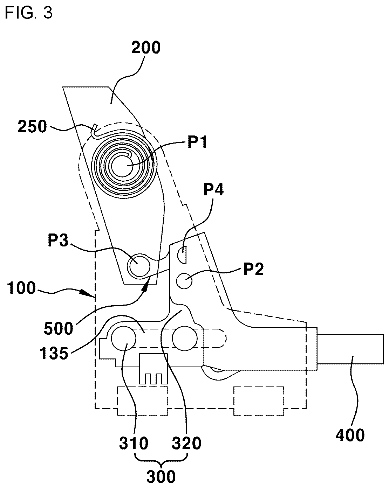

FIG. 3 is a diagram showing the tip-down state of the seat cushion frame according to the embodiment of the present disclosure.

Referring to FIGs. 1 to 3, the back frame 200 may be connected to the center frame 100 at a first point P1 and may be connected to the connecting link 500 at a third point P3. The seat cushion frame 400 may be connected to the sliding link 300 at a second point P2 and may be connected to the connecting link 500 at a fourth point P4. The sliding link 300 may include a main body 310 inserted into the coupling holes 135 and protrusions 320 connected to the main body 310, in which each of the protrusions protrudes toward an upper direction. The seat cushion frame 400 may be connected to the protrusions 320 at the second point P2.

The connecting link 500 may connect the end of the back frame 200 to the end of the seat cushion frame 400. The connecting link 500 may connect the third point P3 of the back frame 200, which is located closer to the seat cushion frame 400 than the first point P1, to the fourth point P4 located closer to the end of the seat cushion frame 400 than the second point P2. In the tip-down state of the seat cushion frame 400, the connecting link 500 may be positioned to be inclined upwards in the third direction Z in which the sliding link 300 is moved. That is, the position of the fourth point P4 may be higher than the position of the third point P3 from the bottom surface on which the vehicle seat 10 is disposed.

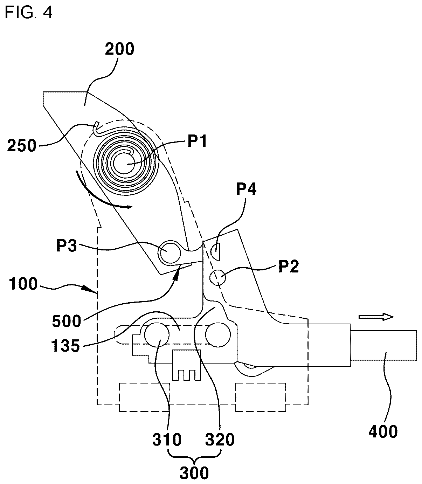

FIG. 4 is a diagram showing a state in which the seat cushion frame according to the embodiment of the present disclosure is slidably moved.

Referring to FIGs. 1, 2, and 4, when locking between the sliding locking part 700 and the sliding bracket 150 is released, the seat cushion frame 400 may be slidably moved in the third direction Z. When a user applies force to the seat cushion frame 400, the seat cushion frame 400 and the sliding link 300 may be moved together, and the back frame 200 may be tilted rearwards by sliding movement of the seat cushion frame 400. For example, the back frame 200 may be rotated around the first point P1 in one direction when the seat cushion frame 400 is slidably moved. The circular spring 250 may apply force to the back frame 200 so as to rotate the back frame 200 in a direction opposite to the above-mentioned one direction. However, since a user applies pressure to the back frame 200 in a state in which the seat cushion frame 400 is slidably moved, the back frame 200 may not be rotated.

When the seat cushion frame 400 is slidably moved in the third direction Z, an angle formed between the extension direction of the connecting link 500 and the third direction Z may decrease. For example, when the seat cushion frame 400 is maximally moved in the third direction Z, the angle formed between the extension direction of the connecting link 500 and the third direction Z may be 0 degrees, or the connecting link 500 may be positioned to be inclined downwards relative to the third direction Z.

According to the embodiment of the present disclosure, even if there is no separate configuration for rotation of the back frame 200, the back frame 200 may be rotated in conjunction with movement of the seat cushion frame 400. Even if the user applies force only to the seat cushion frame 400, the back frame 200 is automatically tilted rearwards. In this manner, the user may easily change the state of the vehicle seat 10 to a comfortable seating posture.

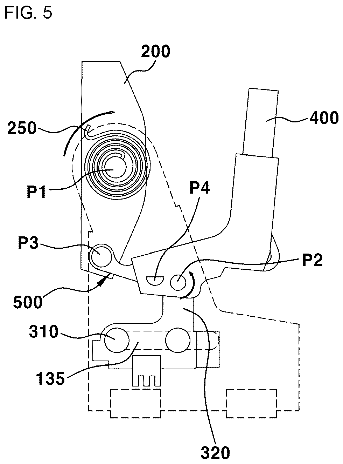

FIG. 5 is a diagram showing the tip-up state of the seat cushion frame according to the embodiment of the present disclosure.

Referring to FIGs. 1, 2, and 5, when locking between the tip-up locking part 600 and the fixing part 410 is released, the seat cushion frame 400 may be tilted up toward the back frame 200. When the seat cushion frame 400 is tilted up, the seat cushion frame 400 may be rotated around a second axis extending through the second point P2. For example, when the seat cushion frame 400 is tilted up or tilted down, the back frame 200 may be rotated in a direction opposite to the rotation direction of the seat cushion frame 400. When the seat cushion frame 400 is tilted up, the circular spring 250 may apply force in a direction in which the back frame 200 is rotated so as to maintain the tip-up state of the seat cushion frame 400. Preferably, when the vehicle seat 10 is rotated, the seat cushion frame 400 may maintain the tip-up state thereof until the vehicle seat 10 is rotated by a specific angle or more. When the seat cushion frame 400 is tilted up, the back frame 200 may be rotated in a direction opposite to the rotation direction thereof when the seat cushion frame 400 is slidably moved. For example, when the seat cushion frame 400 is tilted up, the back frame 200 may be rotated around a first axis extending through the first point P1 in a direction opposite to the above-described one direction. In a state in which the seat cushion frame 400 is tilted up, the connecting link 500 may be positioned to be inclined downwards relative to the third direction Z. That is, in the state in which the seat cushion frame 400 is tilted up, the height of the third point P3 may be higher than the height of the fourth point P4.

According to the embodiment of the present disclosure, even if a separate configuration for rotation of the back frame 200 is not provided, the back frame 200 may be rotated by tip-up movement of the seat cushion frame 400. In addition, the tip-up state of the seat cushion frame 400 may be maintained by the circular spring 250 that applies elastic force so as to constantly maintain rotation in a direction in which the back frame 200 is rotated.

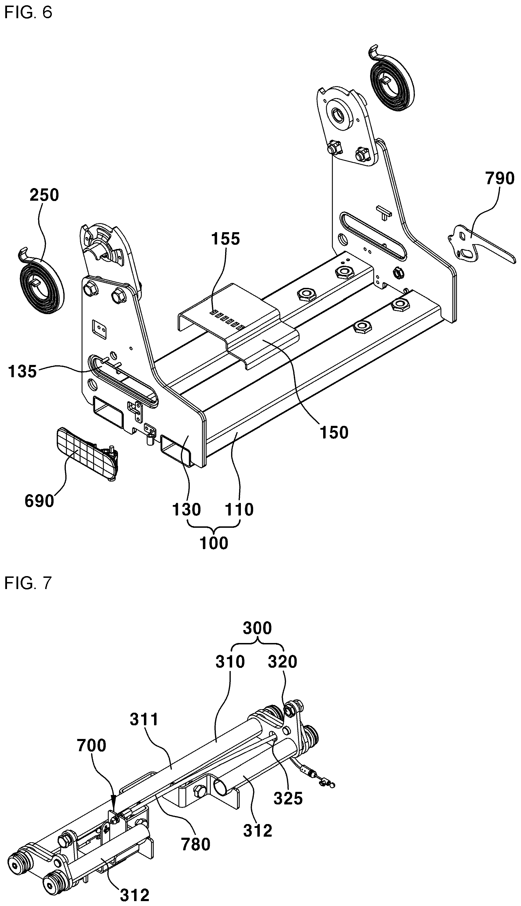

FIG. 6 is a diagram showing a center frame according to the embodiment of the present disclosure.

Referring to FIGs. 1 and 6, the center frame 100 may include a fixed frame 110 extending in the first direction X from one side of the center frame 100 to the other side thereof, and side frames 130 each extending from the fixed frame 110 in the second direction Y perpendicular to the first direction X, in which the side frames have the coupling holes 135 respectively provided therein. The side frames 130 may be respectively provided on one side and the other side of the center frame 100, and the sliding link 300 and the sliding bracket 150 may be disposed in a space between the two side frames 130. The sliding bracket 150 may be disposed on the fixed frame 110. The sliding bracket 150 may include at least one insertion hole 155. The end of the sliding locking part 700 may be inserted into the insertion hole 155. A state in which the end of the sliding locking part 700 is inserted into the insertion hole 155 may be a locked state between the sliding locking part 700 and the sliding bracket 150. A state in which the end of the sliding locking part 700 is separated from the insertion hole 155 may be an unlocked state between the sliding locking part 700 and the sliding bracket 150.

The tip-up lever 690 may be disposed on the side frame 130 provided on one side of the center frame 100. The sliding lever 790 may be disposed on the side frame 130 provided on the other side of the center frame 100.

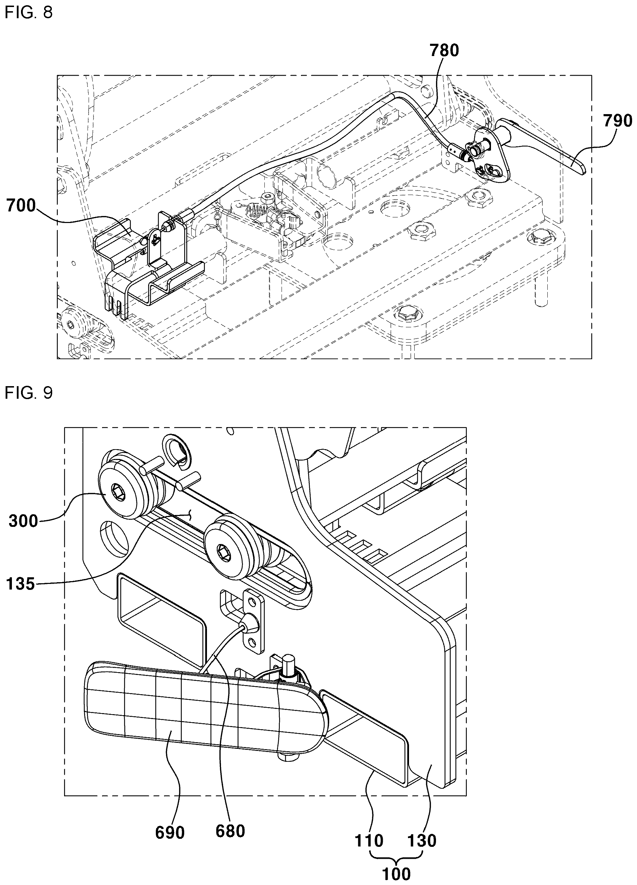

FIG. 7 is a diagram showing the sliding link according to the embodiment of the present disclosure, and FIG. 8 is a diagram showing the sliding locking part according to the embodiment of the present disclosure.

Referring to FIG. 1 and FIGs. 6 to 8, the sliding link 300 may include the main body 310 extending in the first direction X so as to be inserted into the coupling holes 135 respectively provided on opposite sides of the center frame 100, and the protrusions 320 connected to the main body 310 and formed to protrude upwards in a direction perpendicular to the first direction X. Specifically, the main body 310 may include a first pipe 311 extending in the first direction X and a second pipe 312 having a cut-off region in the middle portion thereof. The tip-up locking part 600 may be positioned in the space between the two divided second pipes 312. A through hole 325 through which a second cable 780 connected to the sliding lever 790 passes may be provided in one of the protrusions 320. The second cable 780 may be located in a space between the first pipe 311 and the second pipe 312. The second cable 780 passing through the through hole 325 may be connected to the sliding link 300 and may be connected to the sliding locking part 700 located on the sliding bracket 150. When the user operates the sliding lever 790, the second cable 780 may pull the sliding locking part 700. Accordingly, the sliding locking part 700 may be separated from the insertion hole 155. The second cable 780 may pull the sliding locking part 700 in the first direction X.

FIG. 9 is a diagram showing a state in which the tip-up lever according to the embodiment of the present disclosure is pulled.

Referring to FIGs. 1 and 9, the tip-up lever 690 may be placed on the side frame 130 located on one side of the center frame 100. The tip-up lever 690 may be connected to the first cable 680, and the first cable 680 may be connected to the tip-up locking part 600. When the user pulls the tip-up lever 690, the first cable 680 may pull the tip-up locking part 600, thereby releasing locking between the tip-up locking part 600 and the fixing part 410.

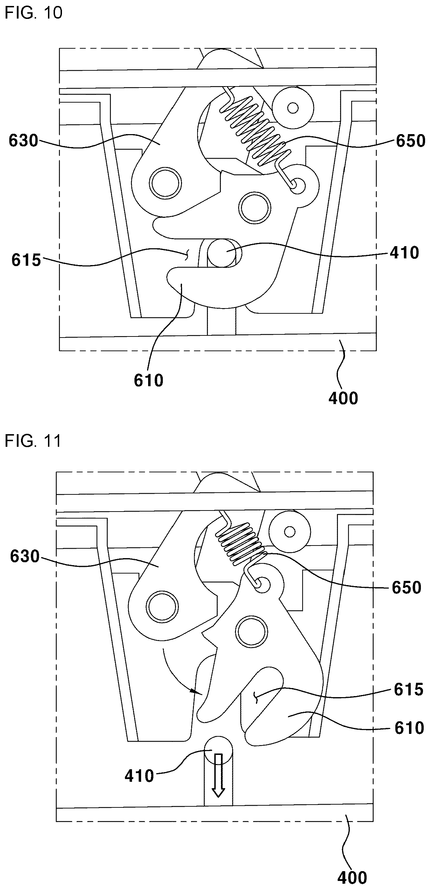

FIG. 10 is a diagram showing a state in which the tip-up locking part and the fixing part according to the embodiment of the present disclosure are locked.

Referring to FIGs. 1, 9, and 10, the tip-up locking part 600 may include a hook part 610 coupled to the fixing part 410, a connecting part 630 connected to the first cable 680, and a spring 650 connecting the connecting part 630 to the hook part 610. The tip-up locking part 600 may include a housing surrounding the hook part 610, the connecting part 630, and the spring 650. The hook part 610 and the connecting part 630 may be in contact with each other. The hook part 610 may include an accommodation groove 615, and the fixing part 410 may be positioned within the accommodation groove 615. The fixing part 410 may be connected to a part of the seat cushion frame 400 extending in the first direction X and may include a portion extending in the second direction Y. For example, the fixing part 410 may be bent in a "C" shape, and a part of the fixing part 410 may be fixed to a part of the seat cushion frame 400 extending in the first direction X. A part of the fixing part 410 extending in the second direction Y may come into contact with the hook part 610. When locking between the fixing part 410 and the hook part 610 is maintained, the seat cushion frame 400 connected to the fixing part 410 may not be tilted up.

FIG. 11 is a diagram showing a state in which the tip-up locking part and the fixing part according to the embodiment of the present disclosure are unlocked.

Referring to FIGs. 1, 9, and 11, when the tip-up lever 690 is operated, the first cable 680 pulls the connecting part 630, and when the connecting part 630 is rotated, the spring 650 may pull the hook part 610. The hook part 610 is rotated by the spring 650, and locking between the tip-up locking part 600 and the fixing part 410 may be released. That is, the hook part 610 may be rotated by elastic force of the spring 650, not by a method in which the connecting part 630 physically presses the hook part 610. The rotational axis of each of the connecting part 630 and the hook part 610 may extend in the second direction Y perpendicular to the first direction X oriented from one side of the center frame 100 to the other side thereof. When the hook part 610 is rotated around the rotational axis extending in the second direction Y, the fixing part 410 may be released from the accommodation groove 615 of the hook part 610. Accordingly, when the user applies external force to the seat cushion frame 400, tilting-up of the seat cushion frame 400 may be performed.

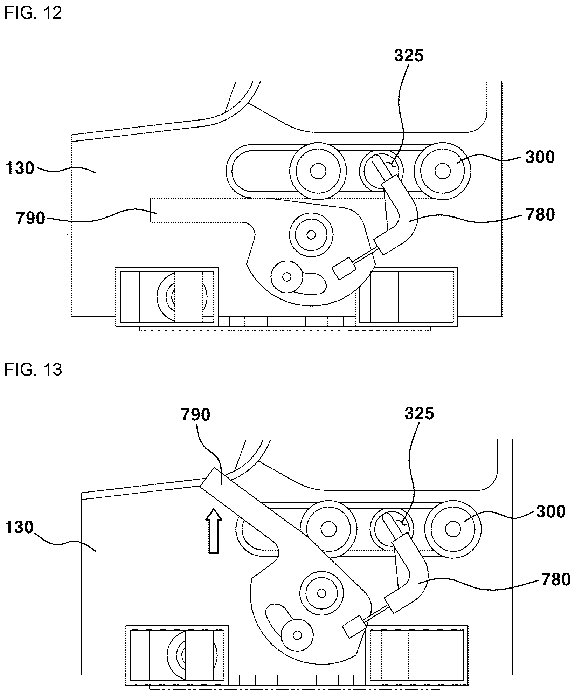

FIG. 12 is a diagram showing the sliding lever according to the embodiment of the present disclosure, and FIG. 13 is a diagram showing a state in which the sliding lever according to the embodiment of the present disclosure is pulled.

Referring back to FIGs. 1, 12, and 13, a user may pull the sliding lever 790 upwards while seated on the vehicle seat 10. The sliding lever 790 may be rotated by external force applied to the sliding lever 790, and the second cable 780 may be pulled by rotation of the sliding lever 790. The second cable 780 may be connected to the sliding locking part 700 by passing through the coupling holes 135 and the through hole 325. When the sliding lever 790 is operated by the user, locking by the sliding locking part 700 is released, and the seat cushion frame 400 may be slidably moved.

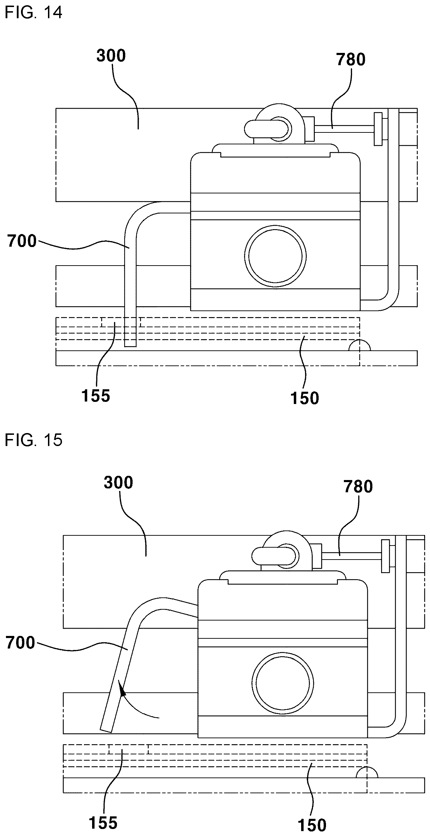

FIG. 14 is a diagram showing a state in which the sliding locking part according to the embodiment of the present disclosure is inserted into the insertion hole, and FIG. 15 is a diagram showing a state in which the sliding locking part according to the embodiment of the present disclosure is separated from the insertion hole.

Referring to FIGs. 1, 14, and 15, when the second cable 780 is pulled, the sliding locking part 700 may be rotated. The rotation axis of the sliding locking part 700 may be substantially the same as the third direction Z. The end of the sliding locking part 700 may be inserted into the insertion hole 155 of the sliding bracket 150 in the locked state. However, when the second cable 780 is pulled, the end of the sliding locking part 700 may be separated from the insertion hole 155 of the sliding bracket 150. When the end of the sliding locking part 700 is separated from the insertion hole 155 of the sliding bracket 150, fixed coupling between the sliding link 300 and the center frame 100 may be released. Therefore, the sliding link 300 may be moved along the coupling holes 300, and the seat cushion frame 400 may be slidably moved.

As is apparent from the above description, the present disclosure provides the following effects.

First, since a seat cushion frame and a back frame are connected to each other through a connecting link so as to enable the back frame to be moved in conjunction with movement of the seat cushion frame. Accordingly, the back frame may be rotated when the seat cushion frame is slidably moved or tilted up.

Second, even if a separate configuration for rotation of the back frame is not provided, the back frame may be rotated in conjunction with movement of the seat cushion frame. When a user applies force only to the seat cushion frame, the back frame is automatically tilted rearwards. In this manner, the user may easily change the state of a vehicle seat to a comfortable seating posture.

Third, even if the separate configuration for rotation of the back frame is not provided, the back frame may be rotated in conjunction with tip-up movement of the seat cushion frame. In addition, the tip-up state of the seat cushion frame may be maintained by a circular spring configured to apply elastic force so as to constantly maintain rotation in a direction in which the back frame 200 is rotated.

While various embodiments of the present disclosure have been described with reference to the accompanying drawings, it will be appreciated by those skilled in the art that changes may be made in these embodiments without departing from the principles and spirit of the disclosure, the scope of which is defined in the appended claims and equivalents thereto. Therefore, the embodiments described above should be understood as illustrative in all respects and should not be considered limiting.

## Claims

1. A vehicle seat comprising:
a center frame including coupling holes formed thereon;
a back frame connected to the center frame at a first point, the back frame being reclinable around a first axis extending through the first point;
a sliding link being movable along the coupling holes;
a seat cushion frame connected to the sliding link at a second point; and
a connecting link configured to connect the back frame to the seat cushion frame,
wherein the seat cushion frame is configured to be tilted up around a second axis through the second point.

2. The vehicle seat of claim 1, wherein the connecting link is configured to connect a third point of the back frame, located closer to the seat cushion frame than the first point, to a fourth point located closer to an end of the seat cushion frame than the second point.

3. The vehicle seat of claim 1 or 2, wherein the seat cushion frame is configured to be moved in conjunction with movement of the sliding link, and the back frame is rotated around the first point in conjunction with movement of the seat cushion frame.

4. The vehicle seat of anyone of claims 1-3, wherein:
the sliding link comprises a main body and protrusions, the main body extending in a first direction so as to be inserted into the coupling holes respectively provided on opposite sides of the center frame, the protrusions being connected to the main body and protruding toward an upper direction perpendicular to the first direction, and
each of the protrusions is configured to be connected to the seat cushion frame at the second point.

5. The vehicle seat of anyone of claims 1-4, further comprising a tip-up locking part configured to be connected to the sliding link or the center frame,
wherein the tip-up locking part comprises a hook part configured to be locked with a fixing part provided on the seat cushion frame.

6. The vehicle seat of claim 5, further comprising a tip-up lever provided on one side of the center frame and a first cable configured to be connected to the tip-up lever, wherein:
the tip-up locking part comprises a connecting part connected to the first cable and a spring configured to connect the connecting part to the hook part, and
when the tip-up lever is operated, the first cable is configured to pull the connecting part, and when the connecting part is rotated, the hook part is configured to be rotated so as to release locking between the tip-up locking part and the fixing part.

7. The vehicle seat of claim 6, wherein:
each of the connecting part and the hook part includes a rotational axis extending in a second direction perpendicular to the first direction oriented from one side of the center frame to the other side thereof, and
the fixing part comprises a portion extending in the second direction, the portion contacting the hook part.

8. The vehicle seat of anyone of claims 1-7, wherein:
the center frame comprises a fixed frame extending in a first direction oriented from one side of the center frame to the other side thereof, and side frames each extending from the fixed frame in a second direction perpendicular to the first direction, the side frames respectively including the coupling holes formed thereon, and
the fixed frame includes a sliding bracket located thereon, the sliding bracket including an insertion hole formed therein.

9. The vehicle seat of claim 8, further comprising a circular spring disposed at the first point of each of the side frames, wherein:
the circular spring includes a first end fixed to the center frame and a second end fixed to the back frame, and
when the seat cushion frame is tilted up, the circular spring is configured to apply force in a direction in which the back frame is rotated so as to maintain a tip-up state of the seat cushion frame.

10. The vehicle seat of claim 8 or 9, wherein:
the sliding bracket includes a sliding locking part provided thereon, the sliding locking part being connected to the sliding link, and
when an end of the sliding locking part is separated from the insertion hole provided in the sliding bracket, the sliding link is configured to be movable along the coupling holes.

11. The vehicle seat of claim 10, further comprising a sliding lever provided on the other side of the center frame and a second cable configured to connect the sliding lever to the sliding locking part,
wherein the second cable is configured to pull the sliding locking part in conjunction with an operation of the sliding lever such that the sliding locking part is separated from the insertion hole.

12. The vehicle seat of anyone of claims 1-11, wherein the connecting link is positioned to be inclined upwards relative to a movement direction of the sliding link in a tip-down state of the seat cushion frame.

13. The vehicle seat of anyone of claims 1-12, wherein the back frame is rotated in a direction opposite to a rotation direction of the seat cushion frame when the seat cushion frame is tilted up or tilted down.

14. The vehicle seat of anyone of claims 1-13, further comprising a swivel device connected to the center frame so as to enable rotation of the center frame.
